# EUROPÄISCHE PATENTSCHRIFT

(11) **EP 1 964 459 B1**
(45) Veröffentlichungstag und Bekanntmachung des Hinweises auf die Patenterteilung: **28.12.2011**
(21) Anmeldenummer: 08002710.5
(22) Anmeldetag: 14.02.2008
(51) Int. Cl.: A01C 7/20

(54) **Sämaschine**
Sowing machine
Machine à semer

(30) Priorität: 02.03.2007 DE 102007010626
(43) Veröffentlichungstag der Anmeldung: 03.09.2008
(73) Patentinhaber: RAUCH LANDMASCHINENFABRIK GMBH, D-76547 Sinzheim (DE); KUHN S.A., 67700 Saverne (FR)
(72) Erfinder: Klein, Frederic, 67500 Haguenau (FR); Kremser, Jermey, 67660 Betschdorf (FR); Schickinger, Manfred, 76547 Sinzheim (DE); Schickinger, Harald, 76547 Sinzheim (DE); Dircks, Hartmut, 76547 Sinzheim (DE); Gotzen, Christian, 41751 Viersen (DE)
(74) Vertreter: Lichti, Heiner

(56) Entgegenhaltungen:
- EP-A- 1 391 147
- EP-A- 1 483 952
- EP-A- 1 634 489
- DE-U1- 29 910 414
- US-B1- 6 454 019

## Beschreibung

Die Erfindung betrifft eine Sämaschine mit einem Saatgutbehälter, einen diesen tragenden Rahmen, einer Scharschiene und einer der Anzahl der Säreihen entsprechenden Anzahl von Säscharen, die jeweils über eine Viergelenkkette mit der Scharschiene verbunden sind, wobei die Basis der Viergelenkkette an der Scharschiene befestigt ist und an ihren Enden je ein Gelenk für die sich entgegen der Laufrichtung der Sämaschine erstreckenden Lenker aufweist, die wiederum über je ein Gelenk mit der die Viergelenkkette schließenden und das Säschar führenden Koppel verbunden sind, wobei die Viergelenkkette unter den Schardruck erzeugender Federwirkung steht. Eine solche Sämaschine ist aus US 6 454 019 bekannt.

Bei Sämaschinen ist es bekannt, die Säschare mittels Schararmen an einer quer zur Laufrichtung der Sämaschine verlaufenden Scharschiene über je ein Schwenklager zu lagern und den Schardruck über eine Federbelastung der Schararme zu erzeugen (z.B. EP 1 380 201 B1). Dabei ist es insbesondere auch bekannt, den eingelenkgeführten Schararm an seinem scharfernen Ende mit einem gummigedämpften Lager auf der Scharschiene anzuordnen, wobei der Schardruck durch relatives Verdrehen der das Lager bildenden Teile erzeugt wird (z.B. DE 299 10 414 U1 und Prospekt HORSCH Pronto 3 der HORSCH Maschinen GmbH - Druckvermerk 2001.11). Die Einsatztiefe - gleich Sätiefe - wird durch Höhenverstellung der Scharschiene ermöglicht. Bei diesen eingelenkgeführten Säscharen können diese quer zur Laufrichtung auch in zwei Reihen hintereinander angeordnet werden, wobei aufgrund des unterschiedlichen Abstandes zur Scharschiene lange und kurze Schararme vorhanden sind.

Bei diesen bekannten Konstruktionen ergibt sich aufgrund der breiten Anbindung der Schararme an der Scharschiene eine gute Seitenführung der Säschare, also eine gute parallele Säfurchenbildung. Dem steht eine ungünstige, steife Anbindung des Schars an der Scharschiene gegenüber, so dass sich das einzelne Säschar bei Kurvenfahrt pflugartig verhält, also nicht elastisch genug ist. Außerdem ermöglicht die Eingelenkigkeit bei noch tragbarer Schararmlänge nur einen geringen Hub und es treten bei kleinen Auslenkwinkeln der Schararme schon sehr hohe Kräfte in den Gummielementen des Gelenks jedes Schararms auf. Beim Ausheben der Säschare auf dem Feld, im Vorgewende oder nach der Säarbeit muss zur Vermeidung von Schädigungen der elastischen Lager der Auslenkwinkel der Schararme mit den Säscharen durch einen Anschlag begrenzt werden.

Ferner sind Sämaschinen des eingangs genannten Aufbaus mit den im Oberbegriff des Anspruchs 1 genannten Merkmalen bekannt (LEMKEN Pneumatische Drillmaschinen Solitär der Firma LEMKEN GmbH & Co. KG - Prospekt Druckvermerk FS.B.O.S.S. 09/05 1750058/De), bei der das Säschar über eine mit der Scharschiene verbundene Viergelenkkette geführt ist. Die Basis der Viergelenkkette ist an der Scharschiene befestigt und ist an ihren Enden über Lager mit den Lenkern verbunden, die ihrerseits an ihren Enden über Lager mit der die Viergelenkkette schließenden Koppel verbunden sind. In dem den unteren Lenker nach unten überragenden Arm der Koppel ist das Scheibenschar gelagert.

Die Viergelenkkette ist als konvergierendes Lenkgestänge ausgebildet, d.h. die Basis und die Koppel einerseits sowie die Lenker andererseits verlaufen nicht parallel zueinander. Das Lenkergestänge jedes Säschars ist durch eine Diagonalfeder unter Federdruck gesetzt. Die Einsatztiefe und die Einstellung des Schardrucks wird einerseits durch Höhenverstellung der Scharschiene, andererseits durch die in der Länge kompliziert einstellbaren Diagonalfedern ermöglicht. Letzteres ist aufwändig und ungenau. Gegenüber dem eingelenkgeführten Säschar ergibt sich der Vorteil, dass der Schwerpunkt näher an die Sämaschine heranrückt. Ferner hat der Aufbau Vorteile im dynamischen Verhalten. Nachteilig ist die wenig seitenstabile Führung des Lenkgestänges, da die Gelenke sehr schmal sind. Dadurch kann es bei Seitenkräften, z.B. bei Kurven- oder Hangfahrt oder bei Anlaufen der Säschare gegen Kluten oder Steine zu starken Seitenbewegungen kommen. Wenn sich benachbarte Schare durch Ausweichen eines Schars annähern, also nicht mehr einen konstanten Abstand von z.B. 12,5 cm haben, liegen die Säfurchen näher beieinander und werden die Saatkörner in engerem Abstand abgelegt, was beim Aufwachsen der Saat zu verstärkter Konkurrenz der Pflanzen untereinander mit daraus resultierenden Ertragsverlusten führt, während in den jeweils benachbarten Reihen mit dem größeren Abstand der Säfurchen der Unkrautdruck wächst.

Aufgrund der Vielzahl der Arbeitsspiele des Lenkgestänges mit unterschiedlicher Amplitude und unterschiedlicher Intensität sind die Lager des Lenkgestänges hoch belastet und einem ständigen, schnellen Verschleiß ausgesetzt.

Ausgehend von der den Oberbegriff des Anspruchs 1 bildenden Sämaschine liegt der Erfindung die Aufgabe zugrunde, eine verschleißfreie Scharführung bei selbsttätiger Begrenzung der Auslenkung der Schare zu erzielen, um eine hohe Querkraftstabilität und eine einfache Schardruck- und Sätiefeneinstellung zu ermöglichen. Ferner soll die Seitenführung in dem der Scharschiene nahen Bereich möglichst steif sein, während die Anhängung am Schar eine Flexibilität in einer Vertikalebene quer zur Laufrichtung der Sämaschine ermöglichen soll. Schließlich soll das Gewicht der Scharführung minimiert und sollen die Herstell- und Montagekosten durch eine möglichst geringe Anzahl von Bauteilen für jede einzelne Scharführung gering gehalten werden.

Zur Lösung dieser Aufgabe schlägt die Erfindung zunächst vor, dass jedes Gelenk eine von der Kreisform abweichende Lagerschale mit wenigstens zwei symmetrisch angeordneten Taschen zur Aufnahme je eines sich achsparallel erstreckenden, gummielastischen Elementes und ein in der Lagerschale angeordnetes Profil aufweist, das mit seinen Außenflächen mit jeweils einem gummielastischen Element zusammenwirkt.

Die Federwirkung zur Erzeugung des Schardrucks wird in die vier Gelenke der Viergelenkkette verlagert. Somit entfallen die freiliegenden Diagonalfedern bei der bekannten Bauart. Eine Einzel-Einstellung des Schardrucks einzelner Säschare ist nicht erforderlich. Die Einsatztiefe der Säschare kann durch Höhenverstellung oder Verdrehung der Scharschiene um ihre Achse, die eine entsprechende Verlagerung der Koppel der Viergelenkkette zur Folge hat, erfolgen. Durch die erfindungsgemäße Ausbildung der Gelenke wird gegenüber dem bekannten Lenkgestänge die Querstabilität verbessert, so dass ein seitliches Ausweichen einzelner Schare erschwert wird. Ferner wird beim Überfahren von Steinen oder Kluten verhindert, dass das entsprechende Säschar davor zu tief in den Boden eindringt und danach den Boden erst mit großer Verzögerung erreicht.

Eine bevorzugte Ausführungsform der Erfindung zeichnet sich aus durch eine von der spannungslosen Neutrallage abweichende Relativlage zwischen Lagerschale und Profil an wenigstens einem der Gelenke der Viergelenkkette zur Erzeugung einer unterschiedlichen Vorspannung in diesem wenigstens einen Gelenk gegenüber den anderen Gelenken.

Allein durch die geometrische Zuordnung von Lagerschale und Profil ergibt sich aus der spannungslosen Neutrallage eine Vorspannung in diesem Gelenk gegenüber den übrigen, ggf. vorspannungslosen Gelenken. Bei einer wie immer gearteten Hubbewegung der Koppel stellen sich dann ggf. in einem weiteren oder in allen drei anderen Gelenken elastische Spannungszustände ein, so dass sich die Kraft-Hub-Kennlinie den jeweiligen Anforderungen anpassen lässt.

So kann beispielsweise vorgesehen sein, dass die Relativlage von Lagerschale und Profil an wenigstens einem Gelenk so gewählt ist, dass in der Ausgangslage der Viergelenkkette zwischen der Basis und den Lenkern eine einen geringen Schardruck erzeugende Resultierende an der Koppel zu Wirkung kommt.

Diese Ausführungsform lässt sich insbesondere dahingehend variieren, dass die Relativlage zwischen Lagerschale und Profil an zumindest einem Gelenk so gewählt ist, dass beim Ausheben der Scharschiene in Verbindung mit der sich abbauenden Vorspannung der gummielastischen Elemente in den anderen Gelenken eine untere Begrenzung für die Bewegung der Säschare nach unten gebildet ist.

Dadurch wird beim Ausheben der Scharschiene im Vorgewende oder bei Weg- oder Straßenfahrt das Absenken der Schare selbsttätig begrenzt, ohne dass es zu einer Überbelastung der gummielastischen Elemente in den Gelenken kommt und eines mechanischen Anschlags bedarf.

In weiterer Ausgestaltung ermöglicht es die Erfindung, dass die Relativlage von Lagerschale und Profil an wenigstens zwei Gelenken so gewählt ist, dass sich aufgrund sich ergänzender positiver und negativer Vorspannung in den verschiedenen Gelenken ein flacher Verlauf der Kraft-Hub-Kennlinie an der Koppel der Viergelenkkette ergibt.

Damit lässt sich allein durch die geometrische Anordnung der wenigstens zwei Gelenke bildenden Lagerschalen und Profile zueinander die gewünschte flache Kraft-Hub-Kennlinie an der Koppel der Viergelenkkette verwirklichen, die ein Springen des Säschars bei kleinen Bodenunebenheiten verhindert. Ferner wird eine Überlastung in den Gelenken vermieden.

In weiterer Ausgestaltung ist vorgesehen, dass die Relativlage von Lagerschale und Profil in den Gelenken so gewählt ist, dass sich aufgrund sich ergänzender positiver und negativer Vorspannung in den verschiedenen Gelenken ein linearer Verlauf der Kraft-Hub-Kennlinie an der Koppel der Viergelenkkette ergibt.

Der durch die erfindungsgemäßen Merkmale erreichbare lineare Verlauf der Kraft-Hub-Kennlinie an der Koppel der Viergelenkkette führt in Zusammenwirken mit dem zuvor geschilderten flachen Verlauf zu einem günstigen Verhältnis von Schardruck zu Auslenkung. Auch ergibt sich keine allzu große Hysterse zwischen der Belastung und der Entlastung.

Die Ausbildung von Lagerschale und des in diesem angeordneten Profils kann auf verschiedene Art und Weise erfolgen. So kann vorgesehen sein, dass jede Lagerschale als Oval und das innerhalb der Lagerschale angeordnete Profil ein Oval mit in jeder der beiden Achsen geringerer Länge ausgebildet ist, dass das Oval der Lagerschale an den gegenüberliegenden Innenseiten seiner beiden Scheitel die Taschen für je ein Gummielement bildet, und dass die beiden Ovale jedes Gelenks mit ihren längeren Achsen in jeder Relativlage unter einem spitzen Winkel zueinander stehen. Diese Ausführung kommt mit nur zwei gummielastischen Elementen an jedem Gelenk aus.

Eine andere Ausbildung ergibt sich dann, wenn jede Lagerschale aus einem gleichseitigen Dreieck mit abgerundeten Ecken gebildet ist, die innenseitig die Taschen für die gummielastischen Elemente bilden, und dass jedes in der Lagerschale angeordnete Profil ein etwa kongruentes Dreieck mit abgerundeten Ecken bildet, das in der spannungslosen Neutrallage der gummielastischen Elemente um 180° verdreht gegenüber dem die Lagerschale bildenden Dreieck angeordnet ist. Diese Ausbildung kommt mit drei gummieelastischen Elementen aus und ermöglicht bereits eine relativ einfache Einstellung der spannungslosen oder vorgespannten Relativlage von Lagerschale und Profil.

Eine bevorzugte Ausbildung zeichnet sich dadurch aus, dass die Relativlage von Lagerschale und Profil in den Gelenken so gewählt ist, dass sich aufgrund sich ergänzender positiver und negativer Vorspannung in den verschiedenen Gelenken ein linearer Verlauf der Kraft-Hub-Kennlinie an der Koppel der Viergelenkkette ergibt. Hier wird die gesamte Federwirkung in dem einzelnen Gelenk auf vier symmetrisch angeordnete gummielastische Elemente verteilt, wodurch sich insbesondere eine Verschleißarmut ergibt. Das Quadratprofil lässt sich in einfacher Weise fertigungstechnisch herstellen.

Vorzugsweise ist vorgesehen, dass die Lagerschalen mit den symmetrischen Taschen für die gummielastischen Elemente jeweils an den Enden der Lenker angeordnet und die Profile jeweils mit den Enden der Basis bzw. der Koppel der Viergelenkkette verbunden sind.

Durch die vorgenannte Maßnahme ist die Voreinstellung der Relativlage durch einfache konstruktive Maßnahmen an der Basis bzw. der Koppel zu verwirklichen, während an den Enden der Lenker die Lagerschalen in gleicher Anordnung vorgesehen sein können.

In weiterhin vorteilhafter Ausbildung ist vorgesehen, dass die unterschiedliche Relativlage von Lagerschale und Profilen durch entsprechend unterschiedliche Winkelanordnung der Profile an den Enden der Basis und/oder der Koppel erzielbar ist.

Bei dieser Ausführungsform sind an der Basis und/oder der Koppel lediglich die entsprechenden Aufnahmen winklig derart anzuordnen, dass die Profile die die Relativlage bestimmende Winkelposition einnehmen. Diese Ausführung gibt insbesondere die Möglichkeit, dass die Lenker gleich ausgebildet und in gleicher Weise in die Viergelenkkette integriert sind.

Eine fertigungstechnisch und funktionell einfache Ausführung zeichnet sich dadurch aus, dass jede Lagerschale aus zwei an ihren nach außen weisenden Flanschen verbundenen und sich zu einem quadratischen Rohr ergänzenden Rechteckblechen gebildet ist, deren Innenecken die Taschen für die Aufnahme der gummielastischen Elemente bilden, wobei das die Lagerschale bildende quadratische Rohr und das innerhalb desselben angeordnete Quadratprofil in der Neutrallage der gummielastischen Elemente unter einem Winkel von 45° angeordnet sind.

Eine andere Ausführungsform zeichnet sich dadurch aus, dass jede Lagerschale aus einer kreiszylindrischen Halbschale gebildet ist, beide Halbschalen über nach außen weisende Flanschleisten miteinander verbunden sind und jede Halbschale im Bereich ihres Scheitels eine achsparallele Ausformung zur Aufnahme einander gegenüberliegender gummielastischer Elemente und am Übergang zu den Flanschleisten jeweils eine Sicke aufweist, die sich mit den Sicken am Übergang zu den Flanschleisten der anderen Halbschale zu einer ein gummielastisches Element aufnehmenden Tasche ergänzen.

Diese fertigungstechnische etwas aufwändigere Ausführungsform hat gegenüber der zuvor genannten Ausführungsform den Vorteil einer etwas günstigeren Kraft-Hub-Kennlinie, sofern allein hierauf das Augenmerk gerichtet wird.

Die erfindungsgemäß ausgebildete Viergelenkkette gibt die Möglichkeit, dass die Basis der Viergelenkkette eine außerhalb der ihre endständigen Gelenke verbindenden, gedachten Gerade angeordnete Anbindung an der Scharschiene aufweist. Diese Ausbildung gibt die Möglichkeit, die Viergelenkkette entweder innerhalb oder außerhalb des von ihr umschriebenen Raums an die Scharschiene anzubinden.

Die vorgenannte Ausbildung gibt insbesondere die Möglichkeit, dass zur Führung benachbarter Säschare, in zwei zur Laufrichtung versetzten Reihen die Basis der Viergelenkketten in Laufrichtung abwechselnd vor bzw. hinter der Scharschiene angebunden sind. Dadurch wird der Schwerpunkt der Scharführung in besonders günstiger Weise nach vorne verlagert, ohne dass die beim Stand der Technik vorhandenen Diagonalfedern eines Lenkergestänges stören würden.

Vorzugsweise sind die Gummielemente in den Gelenken an der Basis der Viergelenkkette parallel zur Achse der Gelenke breiter ausgeführt als die in den Gelenken der Koppel.

Durch diese Maßnahme wird insbesondere die Querkraftstabilität der Scharführung erhöht.

Zur Reduzierung des Gewichtes der Scharführung sind die Lenker der Viergelenkkette aus Kunststoffrohren gebildet, die zur Verbesserung der Stabilität vorteilhafter Weise gleichmäßig gekrümmt sind.

Schließlich ist vorgesehen, dass sämtliche Bauteile für die Führung vorderer und hinterer Säschare, die in zwei Reihen versetzt zueinander angeordnet sind, identisch ausgebildet sind. Dadurch lässt sich die für die Scharführung notwendige Anzahl der Bauteile auf ein Minimum beschränken, wodurch sich fertigungs- und montagetechnische Vorteile bei gleichzeitig geringen Herstellkosten ergeben. Auch ist die Ersatzteilhaltung und der Einbau von Ersatzteilen der Scharführung, sofern dies im Einzelfall notwendig ist, ohne Probleme möglich.

Weitere Einzelheiten und Vorteile der Erfindung ergeben sich aus der nachfolgenden Beschreibung einiger in der Zeichnung wiedergegebener Ausführungsbeispiele. In der Zeichnung zeigen:
- Fig. 1: eine schematische Seitenansicht einer pneumatischen Sämaschine;
- Fig. 2: eine vergrößerte Seitenansicht eines Ausführungsbeispiels der erfindungsgemäßen Scharführung;
- Fig. 3: eine der Fig. 2 entsprechende Ansicht der Scharführung für das vordere Säschar einer zweireihigen Schararmordnung;
- Fig. 4: eine der Fig. 3 entsprechende Ansicht einer hinteren Scharführung einer Zweireihenscharanordnung;
- Fig. 5: einen schematischen Querschnitt eines Gelenks der Viergelenkkette in der Neutrallage;
- Fig. 6: eine der Fig. 5 entsprechende Ansicht des Gelenks in vorgespannter Lage;
- Fig. 7: einen schematischen Schnitt einer anderen Ausführungsform des Gelenks;
- Fig. 8: einen schematischen Schnitt einer weiteren Ausführungsform des Gelenks;
- Fig. 9: einen schematischen Schnitt einer vorteilhaften weiteren Ausführungsform des Gelenks in der spannungslosen Neutrallage;
- Fig. 10: eine der Fig. 9 entsprechende Ansicht des Gelenks in vorgespannter Lage;
- Fig. 11: eine schematische Ansicht der Scharführung gemäß Fig. 2 in der ausgehobenen Ausgangsposition;
- Fig. 12: eine der Fig. 11 entsprechende Ansicht im Säbetrieb bei einem mittleren Schardruck;
- Fig. 13: eine Ansicht der Scharführung gemäß Fig. 11 und 12 bei einem maximalen Schardruck;
- Fig. 14-17: schematische Seitenansichten der Scharanordnung unter Andeutung der verschiedenen Möglichkeiten der Sätiefeneinstellung;
- Fig. 18-21: eine Folge von Seitenansichten der Scharführung beim Säbetrieb.

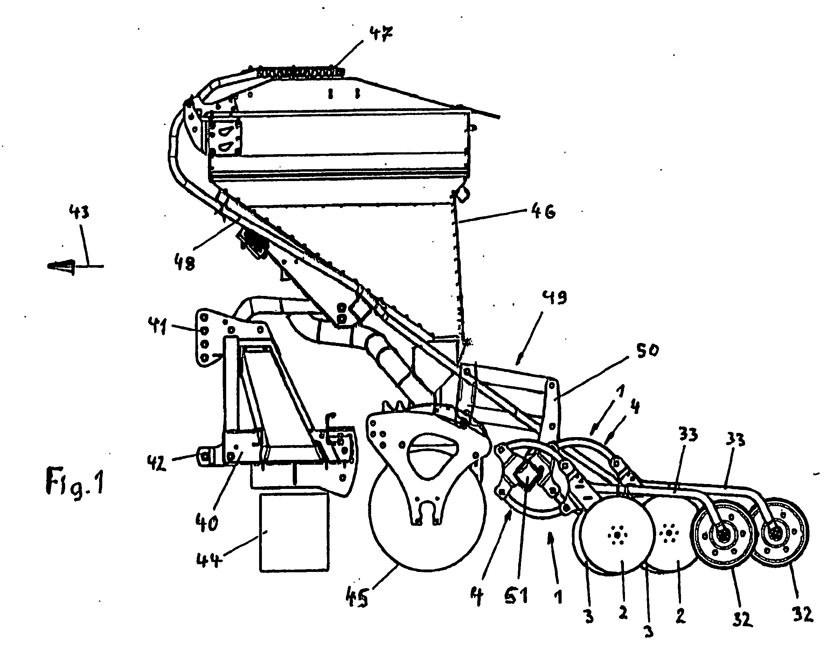

In Fig. 1 ist schematisch eine pneumatische Sämaschine wiedergegeben, die auf einem Bodenbearbeitungsgerät aufgebaut ist. Solche Sämaschinen, die auf Bodenbearbeitungsgeräten aufgebaut sind, sind bekannt, weshalb hier nur auf die wesentlichen Bauteile eingegangen wird. Das Kombinationsgerät ist beispielsweise über einen Rahmen 40 mit Anschlüssen 41, 42 am Dreipunktgestänge eines Traktors angeschlossen, dessen Fahrtrichtung, die der Laufrichtung der Sämaschine entspricht, mit 43 angedeutet ist. Das Bodenbearbeitungsgerät weist beim gezeigten Ausführungsbeispiel eine vorlaufende Kreiselegge 44 und eine dahinter angeordnete Packerwalze 45 auf. Auf dem Bodenbearbeitungsgerät ist der Saatgutbehälter 46 angeordnet, an dessen Kopf das Saatgut über einen Verteiler 47 und eine entsprechende Anzahl von Schlauchleitungen 48 den Säscharen 2, 3, die in diesem Fall als Doppelscheibenschare ausgebildet und in zwei parallelen Reihen hintereinander angeordnet sind, zugeführt wird.

An der Sämaschine ist ein Lenkergestänge 49 angebracht, dessen hinten liegende Koppel 50 an ihrem nach unten weisenden Ende eine quer verlaufende Scharschiene 51, beispielsweise in Form eines Quadratrohrs trägt. Die Scharschiene 51 kann durch das Lenkergestänge 49 in der Höhe verstellt und ggf. auf einem Kreisbogen bewegt werden, womit die Einsatztiefe (Sätiefe) der Säschare 2, 3 eingestellt werden kann. Die Säschare 2, 3 sind über eine vordere Scharführung 1 bzw. eine hintere Scharführung 1, an die Scharschiene 51 angebunden. Mit der vorderen und der hinteren Scharführung 1 sind ferner über Arme 33 vordere und hintere Andruckrollen bzw. Tiefenführungsrollen 32 verbunden.

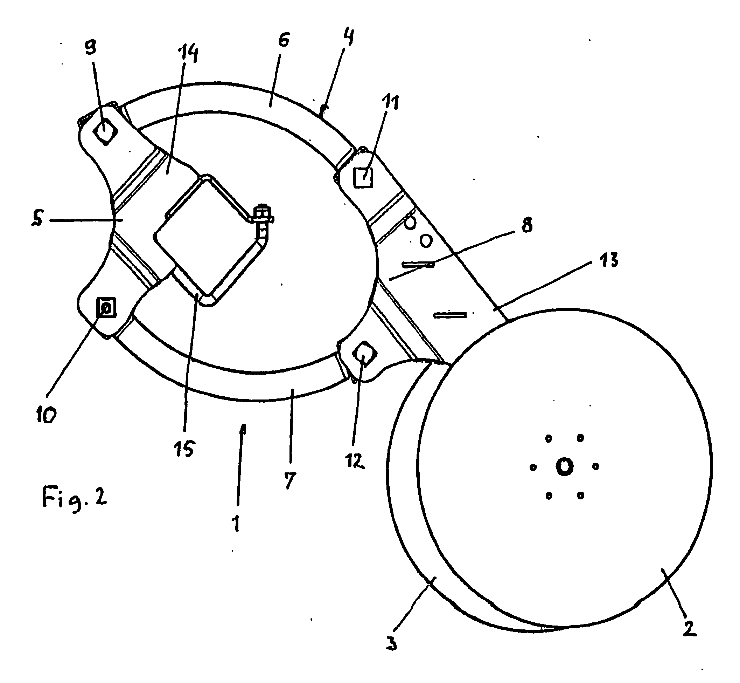

In Fig. 2 ist in Seitenansicht eine Ausführungsform der erfindungsgemäßen Scharführung 1 gezeigt, das beim gezeigten Ausführungsbeispiel ein Doppelscheibenschar 2, 3 führt. Die Scharführung 1 ist von einer Viergelenkkette 4 gebildet, die sich aus einer Basis 5 und sich daran entgegen der Laufrichtung der Sämaschine nach hinten erstreckenden Lenkern 6, 7 sowie einer die Viergelenkkette schließenden Koppel 8 gebildet ist. Die Lenker 6, 7 sind jeweils über Gelenke 9, 10 an die Basis angeschlossen und über Gelenke 11, 12 mit der Koppel 8 verbunden.

Die Koppel 8 weist einen nach hinten unten weisenden Ansatz 13 auf, der als Scharträger für das Doppelscheibenschar 2, 3 dient. Gleichermaßen weist die Basis 5 einen Ansatz 14 auf, über den die Viergelenkkette 4 mittels einer Bügelschraube 15 an die Scharschiene 51 (Fig. 1) angebunden.

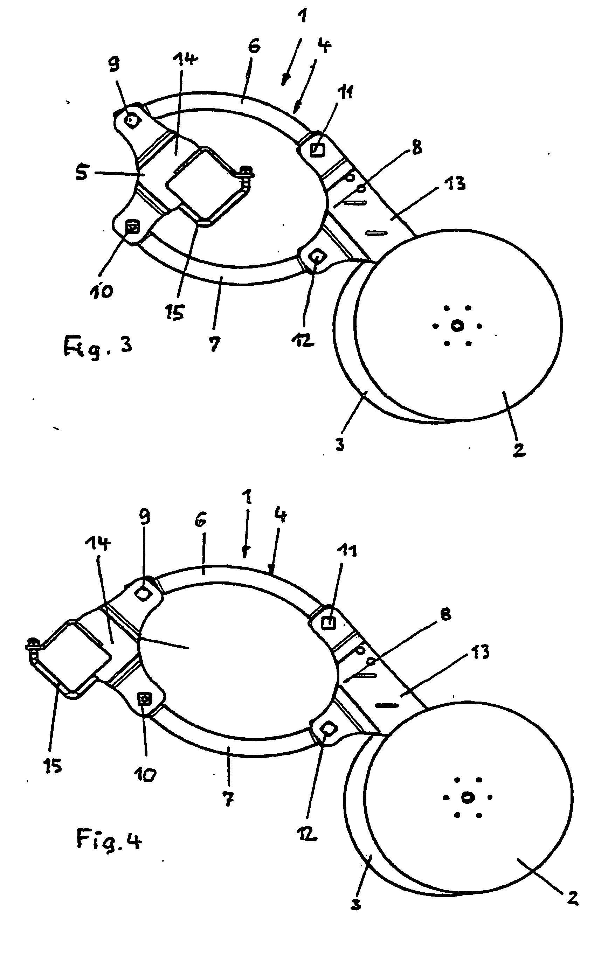

Üblicherweise arbeiten die Säschare - im gezeigten Ausführungsbeispiel die Doppelscheibenschare - in zwei quer zur Laufrichtung der Sämaschine hintereinander angeordneten Reihen, in denen jeweils benachbarte Säschare gegeneinander versetzt sind. Da die Säschare an nur eine Scharschiene angebunden werden, ist bei den bekannten Ausführungen die Scharführung in den beiden Reihen unterschiedlich lang. In dem Ausführungsbeispiel gemäß Fig. 3, das demjenigen der Fig. 2 entspricht, weist die Basis mit ihrem Ansatz 14 in den Innenraum der Viergelenkkette 4, so dass insgesamt eine kurze Scharführung für die in Laufrichtung vordere Reihe gegeben ist. Die Basis 5 kann aber mit ihrem Ansatz 14 auch nach außen weisend in die Viergelenkkette 4 integriert werden, so dass die Anbindung an die Scharschiene mittels der Bügelschraube 15 außerhalb der Viergelenkkette erfolgt, wie Fig. 4 zeigt. Damit wird mit gleichen Bauteilen eine längere Scharführung für ein hinteres Säschar erhalten. Im übrigen sind die Lenker 6, 7 vorteilhafterweise aus gleichlangen und gleich gekrümmten Rundrohren gebildet.

Jedes Gelenk 9, 10, 11 und 12 zwischen der Basis 5 und den Lenkern 6, 7 einerseits bzw. zwischen diesen und der Koppel 8 der Viergelenkkette 4 andererseits weist eine an einem der Teile des Viergelenks 4 angeordnete Lagerschale mit einen von der Kreisform abweichenden Querschnitt und symmetrisch angeordnete Taschen zur Aufnahme je eines sich parallel erstreckenden, gummielastischen Elementes und ein in der Lagerschale angeordnetes Profil auf, das mit seinen Außenflächen mit jeweils einem gummielastischen Element zusammenwirkt.

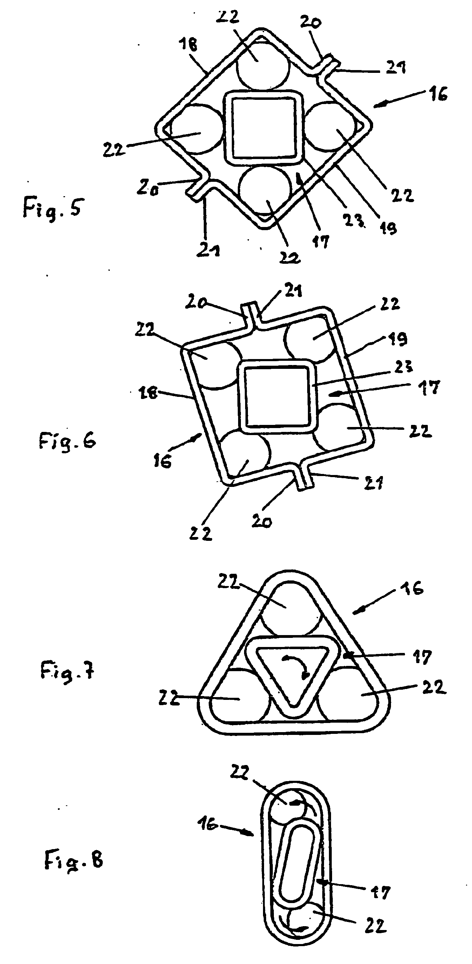

Eine besonders vorteilhafte Ausführungsform ist in Fig. 5 und 6 wiedergegeben. Die Lagerschale 16 ist von einem quadratischen Rohr gebildet, in welchem mit allseitigem Abstand ein Profil 17 angeordnet ist. Das Rohrprofil wird dadurch erhalten, dass zwei Rechteckbleche 18, 19 mit jeweils nach außen weisenden Flanschleisten 20, 21 zu diesem quadratischen Rohrprofil zusammengesetzt sind. Das quadratische Rohrprofil bildet mit seinen Innenecken je eine Tasche zur Aufnahme eines gummielastischen Elementes 22, beispielsweise in Form eines Rundschnurstreifens. Das in der Lagerschale 16 angeordnete Profil 17 besteht aus einem Quadratprofil 23, das mit seinen ebenen Flächen mit den ihnen zugekehrten Seiten der gummielastischen Elemente 22 zusammenwirkt.

In der Neutrallage gemäß Fig. 5 sind die gummielastischen Elemente 22 weitgehend spannungslos. Fig. 6 zeigt eine um etwa 20° verdrehte Position, so dass sich die Relativlage zwischen Lagerschale 16 und Quadratprofil 17 ändern, wobei die gummielastischen Elemente verformt werden und in ihnen eine Spannung aufgebaut wird. Fig. 7 zeigt ein einfacheres Ausführungsbeispiel des Gelenks, bei der die Lagerschale 16 aus einem gleichseitigen Dreieck mit abgerundeten Ecken und das in der Lagerschale 16 angeordnete Profil 17 aus einem etwa kongruenten Profil gebildet ist, das gegenüber der dreieckförmigen Lagerschale 16 um 180° verdreht angeordnet ist. Die Innenseiten der Ecken der dreiförmigen Lagerschale 16 bilden die Taschen für drei gummielastische Elemente 22, mit denen die Außenflächen des dreieckförmigen Profils 17 zusammenwirken. Durch Verdrehen der Lagerschale 16 und des Profils 17 relativ zueinander entsteht in dem Gelenk eine entsprechende Vorspannung.

Fig. 8 zeigt ein einfachstes Ausführungsbeispiel, bei dem die Lagerschale 16 als Oval ausgebildet ist, in der ein ebenfalls ovalförmiges Profil 17 angeordnet ist, dessen Achslänge in beiden Richtungen nennenswert kleiner ist als die Länge der Achsen des die Lagerschale 16 bildenden Ovals. Das Oval der Lagerschale 16 nimmt an seinen gegenüberliegenden verrundeten Seiten jeweils wieder ein gummielastisches Element 22 auf. In der spannungslosen Ausgangslage sind die die Lagerschale 16 und die das Profil 17 bildenden Ovale mit ihren Längsachsen um einen Winkel von 10 bis 20° versetzt. Durch Verdrehen in der umgekehrten Richtung entsteht in dem Gelenk eine Vorspannung.

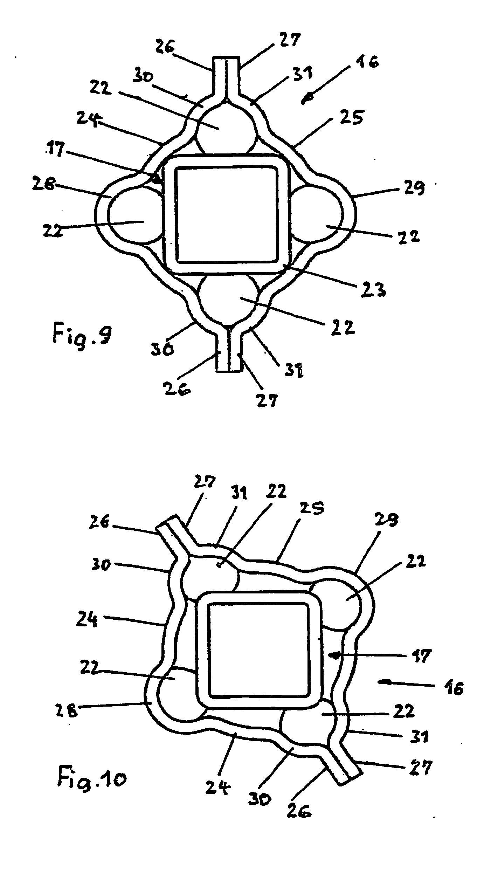

Fig. 9 zeigt eine weitere bevorzugte Ausführungsform eines Gelenks, das ähnlich der Ausführungsform nach Fig. 5 und 6 ausgebildet ist, jedoch in sich eine größere Querstabilität aufweist. Das Gelenk besteht wiederum aus einer Lagerschale 16 und einem darin angeordneten Profil 17. Die Lagerschale 16 besteht im Wesentlichen aus zwei teilzylindrischen Halbschalen 24, 25 mit nach außen abgebogenen Flanschleisten 26, 27, über die die beiden Halbschalen 24, 25 verbindbar sind. Jede Halbschale 24, 25 weist im Bereich ihres Scheitels eine teilkreisförmige Ausformung 28, 29 und im Bereich des Übergangs zu den Flanschleisten 26, 27 je eine etwa viertelkreisförmige Sicke 30, 31 auf. Die einander gegenüberliegenden Ausformungen 28, 29 sowie die im montierten Zustand einander zugekehrten Sicken 30, 31 bilden je eine Tasche zur Aufnahme je eines gummielastischen Elementes 22. Das innenliegende Profil 17 des Gelenks ist wiederum als Quadratprofil 23 ausgebildet. Dessen ebene Außenflächen liegen in der spannungslosen Neutrallage gemäß Fig. 9 den Innenseiten der gummielastischen Elemente 22 an. Bei einer relativen Verdrehung der Lagerschale 16 zum Profil 17 werden die gummielastischen Elemente 22 elastisch verformt und in dem Gelenk eine Spannung aufgebaut, die bei entsprechendem Aufbau und entsprechender Anordnung des jeweiligen Gelenks im Sinne einer Vorspannung mit positivem oder negativem Wert genutzt werden kann.

Der vorstehend beschriebene Aufbau der Gelenke gibt die Möglichkeit, wenigstens eines, ggf. auch mehrere Gelenke durch entsprechenden Einbau in eine von der spannungslosen Neutrallage abweichende Relativlage zwischen Lagerschale und Profil einzustellen, um in diesem wenigstens einen Gelenk gegenüber den anderen Gelenken eine Vorspannung zu erzeugen. Dadurch kann insbesondere eine einen geringen Schardruck erzeugende resultierende Kraft an der Koppel zur Wirkung kommen. Diese Relativlage wird am zweckmäßigsten dadurch verwirklicht, dass das innerhalb der Lagerschale angeordnete Profil beispielsweise an den Enden der Basis so festgelegt ist, dass in dem entsprechenden Gelenk eine Vorspannung entsteht. Gegebenenfalls kann diese Maßnahme auch an beiden Gelenken 9, 10 zwischen der Basis 5 und den Lenkern 6 bzw. 7 vorgesehen sein.

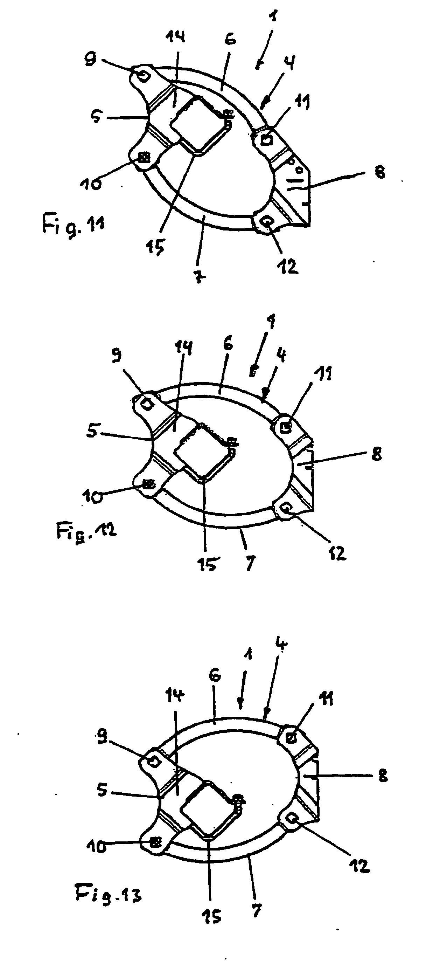

In Fig. 11 ist die Ruhe- oder Ausgangsposition gezeigt. Durch leichten Druck aus einer im Gelenk 9 eingestellten positiven Vorspannung und der Masse des geführten Säschars sind die Gelenke 11 und 12 negativ vorgespannt. Diese Position entspricht der Position des Schars beim Ausheben. Die positive und negative Vorspannung in den Gelenken ergänzt sich dahingehend, dass die Scharführung 4 das ausgehobene Schar ohne Begrenzungsanschlag trägt.

Fig. 12 zeigt eine Arbeitsposition, in der das Gelenk 9 - im Vergleich zu Fig. 11 - weiter positiv vorgespannt wird, während sich die Gelenke 10, 11 und 12 bzw. die in ihnen untergebrachten gummielastischen Elemente 22 (siehe Fig. 5 oder 9) in der neutralen Position befinden. In dieser Position der Auslenkung des nicht gezeigten Schars wird ein kleiner Schardruck, wie er etwa im behinderungsfreien Säbetrieb erforderlich ist, erzeugt. Fig. 13 zeigt demgegenüber eine Position mit maximalem Schardruck oder eine solche beim Überfahren von Hindernissen. Die Scharführung 4 hat den Vorteil, dass sie zu einem linearen Verlauf der Drehmomentkurve über den Auslenkwinkel der Scharführung führt und ein unterer Anschlag beim Ausheben der Sämaschine allein durch die unterschiedliche Vorspannung in den Gelenken gegeben ist.

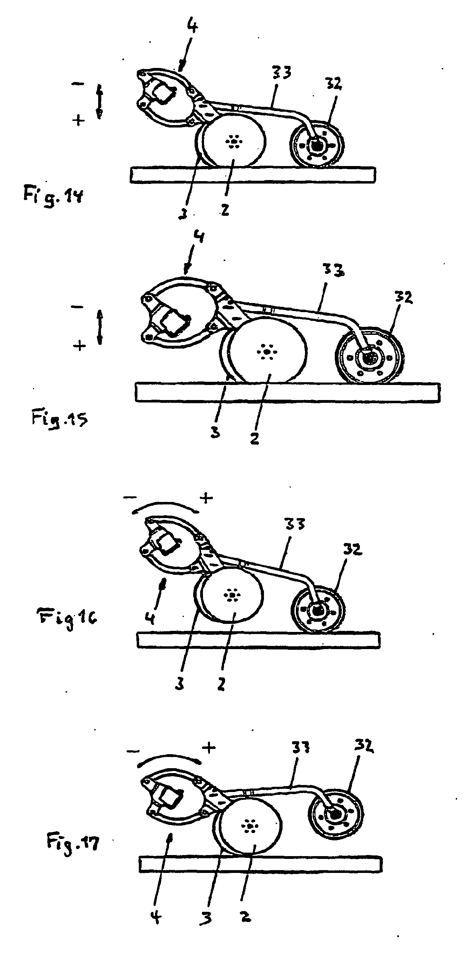

Fig. 14 und 15 zeigt eine Möglichkeit der Schardruck-Verstellung durch Anheben oder Absenken der Scharschiene 51 (Fig. 1) an die die Scharführung 4 über die Basis 5 mit der Bügelschraube 15 angebunden ist. Die Verstellmöglichkeit ist mit dem Doppelpfeil angedeutet, wobei eine Verstellung der Scharschiene in Richtung (+) zu einer Erhöhung des Schardrucks bzw. der Einsatztiefe, eine Verstellung in Richtung (-) zu einer Erniedringung des Schardrucks bzw. Minderung der Einsatztiefe führt (Fig. 15). Eine ähnliche Möglichkeit ergibt sich dadurch, dass die Scharschiene 45 (Fig. 1) auf einem Kreisbogen geführt wird, wie dies in Fig. 16 und 17 angedeutet ist. Es können auch beide Möglichkeiten kombiniert werden.

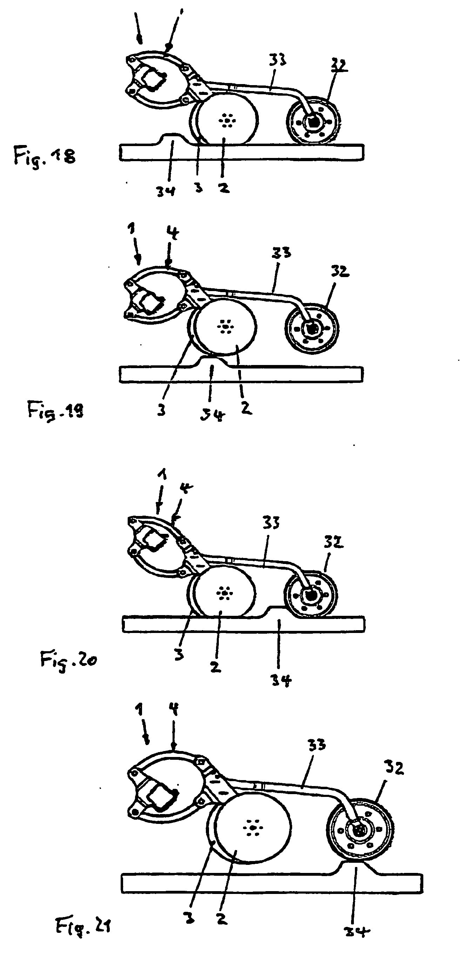

In den Fig. 18 bis 21 sind verschiedene Positionen der Schare beim Säbetrieb gezeigt. In Fig. 18 befinden sich die Doppelscheibenschare 2, 3 in der normalen Arbeitsposition mit parallel nachlaufender Tiefenführungsrolle 32. In Laufrichtung 43 befindet sich im Bereich wenigstens eines Säschars der zweireihigen Säscharanordnung eine Klute oder ein Stein 34, über den zunächst das Schar 2, 3 unter Ansteigen des Schardrucks bei Verstellung der Viergelenkkette 4 angehoben wird und anschließend (Fig. 20) wieder nach unten taucht, um die Furchenbildung und Säarbeit aufzunehmen (Fig. 20). Danach läuft die Andruck- oder Tiefenführungsrolle 32 auf die Klute bzw. den Stein 34 auf und hebt das Säschar 2, 3 kurz aus, bevor auch diese wieder die Klute 34 überwunden hat und sich eine Position gemäß Fig. 18 für den normalen Säbetrieb einstellt. Der Schardruck bleibt dabei in der vorgegebenen Größe erhalten.

### Bezugszeichenliste

| | | | |
|---|---|---|---|
| 1 | Scharführung | 21 | Flanschleiste |
| 2 | Scheibenschar | 22 | gummielastisches Element |
| 3 | Scheibenschar | 23 | Quadratprofil |
| 4 | Viergelenkkette | 24 | Halbschale |
| 5 | Basis | 25 | Halbschale |
| 6 | Lenker | 26 | Flanschleiste |
| 7 | Lenker | 27 | Flanschleiste |
| 8 | Koppel | 28 | Ausformung |
| 9 | Gelenk 5/6 | 29 | Ausformung |
| 10 | Gelenk 7/8 | 30 | Sicke |
| 11 | Gelenk 6/8 | 31 | Sicke |
| 12 | Gelenk 7/8 | 32 | Andruck-Tiefenführungsrolle |
| 13 | Ansatz an Koppel | 33 | Arme |
| 14 | Ansatz an Basis | 34 | Klute, Stein |
| 15 | Bügelschraube | | |
| 16 | Lagerschale | 40 | Rahmen |
| 17 | Profil | 41 | Oberlenkeranschluss |
| 18 | Rechteckblech | 42 | Unterlenkeranschluss |
| 19 | Rechteckblech | 43 | Fahrt-/Laufrichtung |
| 20 | Flanschleiste | 44 | Kreiselegge |
| 45 | Packerwalze | | |
| 46 | Saatgutbehälter | | |
| 47 | Verteiler | | |
| 48 | Schlauchleitung | | |
| 49 | Lenkergestänge | | |
| 50 | Koppel | | |
| 51 | Scharschiene | | |

## Patentansprüche

1. Sämaschine mit einem Saatgutbehälter (46), einen diesen tragenden Rahmen, einer Scharschiene (51) und einer der Anzahl der Säreihen entsprechenden Anzahl von Säscharen (2, 3), die jeweils über eine Viergelenkkette (4) mit der Scharschiene (51) verbunden sind, wobei die Basis (5) der Viergelenkkette (4) an der Scharschiene (51) befestigt ist und an ihren Enden je ein Gelenk (9, 10) für die sich entgegen der Laufrichtung (43) der Sämaschine erstreckenden Lenker (6, 7) aufweist, die wiederum über je ein Gelenk (11, 12) mit der die Viergelenkkette (4) schließenden und das Säschar (2, 3) führenden Koppel (8) verbunden sind, wobei die Viergelenkkette (4) unter den Schardruck erzeugender Federwirkung steht, **dadurch gekennzeichnet, dass** jedes Gelenk (9 bis 12) eine von der Kreisform abweichende Lagerschale (16) mit wenigstens zwei symmetrisch angeordneten Taschen zur Aufnahme je eines sich achsparallel erstreckenden, gummielastischen Elementes (22) und ein in der Lagerschale (16) angeordnetes Profil (17) aufweist, das mit seinen Außenflächen mit jeweils einem gummielastischen Element (22) zusammenwirkt.

2. Sämaschine nach Anspruch 1, **gekennzeichnet durch** eine von der spannungslosen Neutrallage abweichenden Relativlage zwischen Lagerschale (16) und Profil (17) an wenigstens einem der Gelenke (9 bis 12) der Viergelenkkette (4) zur Erzeugung einer unterschiedlichen Vorspannung in diesem wenigstens einen Gelenk gegenüber den anderen Gelenken.

3. Sämaschine nach Anspruch 1 oder 2, **dadurch gekennzeichnet, dass** die Relativlage von Lagerschale (16) und Profil (17) an wenigstens einem Gelenk (9 bis 12) so gewählt ist, dass in der Ausgangslage der Viergelenkkette (4) zwischen der Basis (5) und den Lenkern (6, 7) eine einen geringen Schardruck erzeugende Resultierende an der Koppel (8) zu Wirkung kommt.

4. Sämaschine nach einem der Ansprüche 1 bis 3, **dadurch gekennzeichnet, dass** die Relativlage zwischen Lagerschale (16) und Profil (17) an zumindest einem Gelenk (9 bis 12) so gewählt ist, dass beim Ausheben der Scharschiene (54) in Verbindung mit der sich abbauenden Vorspannung der gummielastischen Elemente (22) in den anderen Gelenken (9 bis 12) eine untere Begrenzung für die Bewegung der Säschare (2, 3) nach unten gebildet ist.

5. Sämaschine nach einem der Ansprüche 1 bis 4, **dadurch gekennzeichnet, dass** die Relativlage von Lagerschale (16) und Profil (17) an wenigstens zwei Gelenken (9, 10) so gewählt ist, dass sich aufgrund sich ergänzender positiver und negativer Vorspannung in den verschiedenen Gelenken ein flacher Verlauf der Kraft-Hub-Kennlinie an der Koppel (8) der Viergelenkkette (4) ergibt.

6. Sämaschine nach einem der Ansprüche 1 bis 5, **dadurch gekennzeichnet, dass** die Relativlage von Lagerschale (16) und Profil (17) in den Gelenken (9 bis 12) so gewählt ist, dass sich aufgrund sich ergänzender positiver und negativer Vorspannung in den verschiedenen Gelenken ein linearer Verlauf der Kraft-Hub-Kennlinie an der Koppel (8) der Viergelenkkette (4) ergibt.

7. Sämaschine nach einem der Ansprüche 1 bis 6, **dadurch gekennzeichnet, dass** jede Lagerschale (16) als Oval und das innerhalb der Lagerschale angeordnete Profil (17) als Oval mit in jeder der beiden Achsen geringerer Länge ausgebildet ist, dass das Oval der Lagerschale an den gegenüberliegenden Innenseiten seiner beiden Scheitel die Taschen für je ein Gummielement (22) aufweist, und dass die beiden Ovale jedes Gelenks (9 bis 12) mit ihren längeren Achsen in jeder Relativlage unter einem spitzen Winkel zueinander stehen.

8. Sämaschine nach einem der Ansprüche 1 bis 6, **dadurch gekennzeichnet, dass** jede Lagerschale (16) aus einem gleichseitigen Dreieck mit abgerundeten Ecken gebildet ist, die innenseitig die Taschen für die gummielastischen Elemente (22) bilden, und dass jedes in der Lagerschale (16) angeordnete Profil (17) ein etwa kongruentes Dreieck mit abgerundeten Ecken bildet, das in der spannungslosen Neutrallage der gummielastischen Elemente um 180° verdreht gegenüber dem die Lagerschale bildenden Dreieck angeordnet ist.

9. Sämaschine nach einem der Ansprüche 1 bis 6, **dadurch gekennzeichnet, dass** jede Lagerschale (16) vier symmetrisch angeordnete Taschen zur Aufnahme je eines gummielastischen Elementes (22) aufweist, und dass das in der Lagerschale angeordnete Profil (17) ein Quadratprofil (23) ist, dessen Außenflächen in der spannungslosen Neutrallage des Gelenks (9 bis 12) je einem gummielastischen Element anliegen.

10. Sämaschine nach einem der Ansprüche 1 bis 9, **dadurch gekennzeichnet, dass** die Lagerschalen (16) mit den symmetrischen Taschen für die gummielastischen Elemente (22) jeweils an den Enden der Lenker (6, 7) angeordnet und die Profile (17) jeweils mit den Enden der Basis (5) bzw, der Koppel (8) der Viergelenkkette (4) verbunden sind.

11. Sämaschine nach einem der Ansprüche 1 bis 10, **dadurch gekennzeichnet, dass** die unterschiedliche Relativlage von Lagerschale (16) und Profil (17) durch entsprechend unterschiedliche Winkelanordnung der Profile (17) an den Enden der Basis (5) und/oder der Koppel (8) erzielbar ist.

12. Sämaschine nach einem der Ansprüche 1 bis 11, **dadurch gekennzeichnet, dass** die Lenker (5, 6) gleich ausgebildet und in gleicher weise in die Viergelenkkette (4) integriert sind.

13. Sämaschine nach einem der Ansprüche 9 bis 12, **dadurch gekennzeichnet, dass** jede Lagerschale (16) aus zwei an ihren nach außen weisenden Flanschen (20, 21) verbundenen und sich zu einem quadratischen Rohr ergänzenden Rechteckblechen (18, 19) gebildet ist, deren Innenecken die Taschen für die Aufnahme der gummielastischen Elemente (22) bilden.

14. Sämaschine nach Anspruch 13, **dadurch gekennzeichnet, dass** das die Lagerschale (16) bildende quadratische Rohr und das innerhalb desselben angeordnete Quadratprofil (23) in der Neutrallage der gummielastischen Elemente (22) unter einem Winkel von 45° angeordnet sind.

15. Sämaschine, insbesondere nach einem der Ansprüche 1 bis 6 und 9 bis 12, **dadurch gekennzeichnet, dass** jede Lagerschale (16) aus einer kreiszylindrischen Halbschale (24, 25) gebildet ist, beide Halbschalen (24, 25) über nach außen weisende Flanschleisten (26, 27) miteinander verbunden sind und jede Halbschale im Bereich ihres Scheitels eine achsparallele Ausformung (28 bzw. 29) zur Aufnahme einander gegenüberliegender gummielastischer Elemente (22) und am Übergang zu den Flanschleisten jeweils eine Sicke (30 bzw. 31) aufweist, die sich mit den Sicken (30 bzw. 31) am Übergang zu den Flanschleisten (26, 27) der anderen Halbschale zu einer ein gummielastisches Element (22) aufnehmenden Tasche ergänzen.

16. Sämaschine nach Anspruch 15, **dadurch gekennzeichnet, dass** die Lagerschale (16) und das innerhalb derselben angeordnete Quadratprofil (23) in der Neutrallage der gummielastischen Elemente (22) so angeordnet sind, dass die Ecken des Quadratprofils symmetrisch zwischen den gummielastischen Elementen (22) liegen.

17. Sämaschine nach einem der Ansprüche 1 bis 16, **dadurch gekennzeichnet, dass** die Basis (5) der Viergelenkkette (4) eine außerhalb der ihre endständigen Gelenke (9, 10) verbindenden, gedachten Gerade angeordnete Anbindung (14, 15) an der Scharschiene (51) aufweist.

18. Sämaschine nach einem der Ansprüche 1 bis 17, **dadurch gekennzeichnet, dass** die Basis (5) derart in die Viergelenkkette (4) integrierbar ist, dass die Anbindung (14, 15) an die Scharschiene (51) wahlweise innerhalb oder außerhalb der Viergelenkkette (4) liegt.

19. Sämaschine nach Anspruch 15, **dadurch gekennzeichnet, dass** zur Führung benachbarter Säschare, in zwei zur Laufrichtung versetzten Reihen die Basis (5) der Viergelenkketten (4) in Laufrichtung (43) abwechselnd vor bzw. hinter der Scharschiene (51) an diese angebunden ist.

20. Sämaschine nach einem der Ansprüche 1 bis 19, **dadurch gekennzeichnet, dass** die Gummielemente (22) in den Gelenken (9, 10) an der Basis (5) der Viergelenkkette (4) parallel zur Achse der Gelenke (9, 10) breiter ausgeführt sind als die in den Gelenken (9, 10) der Koppel (8).

21. Sämaschine nach einem der Ansprüche 1 bis 20, **dadurch gekennzeichnet, dass** die Lenker (6, 7) der Viergelenkkette (4) aus Kunststoffrohren gebildet sind.

22. Sämaschine nach Anspruch 21, **dadurch gekennzeichnet, dass** die die Lenker (6, 7) bildenden Kunststoffrohre gleichmäßig gekrümmt sind.

23. Sämaschine nach einem der Ansprüche 1 bis 22, **dadurch gekennzeichnet, dass** sämtliche Bauteile für die Führung vorderer und hinterer Säschare, die in zwei Reihen versetzt zueinander angeordnet sind, identisch ausgebildet sind.

## Claims

1. A seed drill with a seed container (46), a frame supporting this, a coulter rail (51) and a number of seed shares (2, 3) corresponding to the number of drilling rows, which shares are each connected by a four-link chain (4) to the coulter (51), wherein the base (5) of the four-link chain (4) is fastened to the coulter (51) and has at their ends a link (9, 10) for the guides (6, 7) extending against the direction of running (43) of the seed drill, which guides are in turn connected by a link (11, 12) to the coupling (8) closing the four-link chain (4) and guiding the seed share (2, 3), wherein the four-link chain (4) is subject to the spring action generating the share pressure, **characterised in that** each link (9 to 12) has a bearing bush (16) deviating from the circular shape with at least two symmetrically arranged pockets for receiving a rubber-elastic element (22) extending axially parallel, respectiveley and a profile (17) arranged in the bearing bush (16), which profile interacts with its outer faces with a rubber-elastic element (22), respectively.

2. The seed drill according to Claim 12, **characterised by** a relative position, deviating from the tension-free neutral position, between the bearing bush (16) and profile (17) on at least one of the links (9 to 12) of the four-link chain (4) to generate a different pre-tension in this at least one link relative to the other links.

3. The seed drill according to Claim 1 or 2, **characterised in that** the relative position of the bearing bush (16) and profile (17) is selected on at least one joint (9 to 12) so that in the initial position of the four-link chain (4) between the base (5) and the guides (6, 7) a resultant generating a low share pressure comes to act on the coupling (8).

4. The seed drill according to any one of Claims 1 to 3, **characterised in that** the relative position between the bearing bush (16) and profile (17) on at least one link (9 to 12) is selected so that when the coulter (54), combined with the

5. The seed drill according to any one of Claims 1 to 4, **characterised in that** the relative position of the bearing bush (16) and profile (17) is selected on at least two links (9, 10) so that a flat course of the force-stroke characteristic on the coupling (8) of the four-link chain (4) results from a supplementary positive and negative pre-tension in the different links.

6. The seed drill according to any one of Claims 1 to 5, **characterised in that** the relative position of the bearing bush (16) and profile (17) is selected in the links (9 to 12) so that a linear course of the force-stroke characteristic on the coupling (8) of the four-link chain (4) results from supplementary positive and negative pre-tension in the different links.

7. The seed drill according to any one of Claims 1 to 6, **characterised in that** each bearing bush (16) is designed as an oval and the profile (17) arranged inside the bearing bush as an oval with a length that is shorter in each of the two axes, **in that** the oval of the bearing bush has the pockets for each of the rubber elements (22) on the opposing inner sides of its two vertices, and **in that** both ovals of each link (9 to 12) are at an acute angle to each other with their longer axes in each relative position.

8. The seed drill according to any one of Claims 1 to 6, **characterised in that** each bearing bush (16) is formed from an isosceles triangle with rounded corners, which on the inside form the pockets for the rubber-elastic elements (22), and **in that** each profile (17) arrange din the bearing bush ('16) forms an approximately congruent triangle with rounded corners, which triangle is arranged in the tension-free neutral position of the rubber-elastic elements offset 180° relative to the triangle forming the bearing bush.

9. The seed drill according to any one of Claims 1 to 6, **characterised in that** each bearing bush (16) has four symmetrically arranged pockets for receiving each rubber-elastic element (22), and **in that** the profile (17) arranged in the bearing bush is a square profile (23) whose outer faces abut against a rubber-elastic element in the tension-free neutral position of the link (9 to 12).

10. The seed drill according to any one of Claims 1 to 9, **characterised in that** the bearing bushes (16) with the symmetrical pockets for the rubber-elastic elements (22) are each arranged at the ends of the guides (6, 7), and **in that** the profiles (17) are each connected to the ends of the base (5) and coupling (8) of the four-link chain (4).

11. The seed drill according to any one of Claims 1 to 10, **characterised in that** the different relative position of the bearing bush (16) and profile (17) can be achieved by the different angular arrangement of the profiles (17) on the ends of the base (5) and/or coupling (8).

12. The seed drill according to any one of Claims 1 to 11, **characterised in that** the joints (5, 6) are of identical design and are integrated in the same manner in the four-link chain (4).

13. The seed drill according to any one of Claims 9 to 12, **characterised in that** each bearing bush (16) is formed from two rectangular plates (18, 19) connected at their outwardly directed flanges (20, 21) and combining to form a square tube, the inner corners of which plates form the pockets for receiving the rubber-elastic elements (22).

14. The seed drill according to Claim 13, **characterised in that** the square tube forming the bearing bush (16) and the square profile (23) arranged inside the same are arranged in the neutral position of the rubber-elastic elements (22) at an angle of 45°.

15. The seed drill, in particular according to any one of Claims 1 to 6 and 9 to 12, **characterised in that** each bearing bush (16) is formed from a circular-cylindrical half-bush (24, 25), **in that** both half-bushes (24, 25) are connected to each other by outwardly directed flange strips (26, 27), and **in that** each half-bush in the region of their apex has an axial parallel shape (28 and 29 respectively) for receiving opposing rubber-elastic elements (22) and, on the transition to the flange strips, each has a bead (30 and 31 respectively), which combine with the beads (30 and 31 respectively) at the transition to the flange strips (26, 27) of the other half-bush to form a pocket receiving a rubber-elastic element (22).

16. The seed drill according to Claim 15, **characterised in that** the bearing bush (16) and the square profile(23) arranged inside the same are arranged in the neutral position of the rubber-elastic elements (22) so that the corners of the square profile lie symmetrically between the rubber-elastic elements (22).

17. The seed drill according to any one of Claims 1 to 16, **characterised in that** the base (5) of the four-link chain (4) has a connection (14, 15) to the coulter (51) arranged outside the imaginary straight line connecting their terminal links (9, 10).

18. The seed drill according to any one of Claims 1 to 17, **characterised in that** the base (5) can be integrated in the four-link chain (4) in such a manner that the connection (14, 15) to the coulter (51) lies either inside or outside the four-link chain (4).

19. The seed drill according to Claim 15, **characterised in that** the base (5) of the four-link chains (4) is connected alternately in front of and behind the coulter (51) to the same in two rows offset to the direction of running for guiding adjacent seed shares.

20. The seed drill according to any one of Claims 1 to 19, **characterised in that** the rubber elements (22) in the links (9, 10) on the base (5) of the four-link chain (4), parallel with the axis of the links (9, 10), are designed wider than those in the links (9, 10) of the coupling (8).

21. The seed drill according to any one of Claims 1 to 20, **characterised in that** the guides (6, 7) of the four-link chain (4) are formed from plastic tubes.

22. The seed drill according to Claim 21, **characterised in that** the plastic tubes forming the guides (6, 7) are uniformly curved.

23. The seed drill according to any one of Claims 1 to 22, **characterised in that** all the components are identically designed for guiding front and rear seed shares which are arranged in two rows offset to each other.

## Revendications

1. Machine à semer équipée d'un réservoir de semences (46), d'un châssis le supportant, d'un rail de soc (51) et d'un nombre de socs à semer (2, 3) correspondant au nombre de rangs à semer, ces éléments étant respectivement reliés au rail de soc (51) via une chaîne à quatre joints articulés (4), la base (5) de la chaîne à quatre joints articulés (4) étant fixée au rail de soc (51) et présentant respectivement, au niveau de ses extrémités, une articulation (9, 10) pour les bras oscillants (6, 7) s'étendant à l'opposée de la direction d'avancement (43) de la machine à semer, lesdits bras étant à leur tour reliés, via respectivement une articulation (11, 12), à l'élément de couplage (8) fermant la chaîne à quatre joints articulés (4) et guidant le soc à semer (2, 3), la chaîne à quatre joints articulés (4) étant sous l'effet de ressort produit sous la pression du soc, **caractérisée en ce que** chaque articulation (9 à 12) présente une coque de stockage (16) dont la forme s'écarte d'une forme circulaire avec au moins deux poches symétriques prévues pour accueillir respectivement un élément (22) élastique à la façon du caoutchouc s'étendant parallèlement à l'axe et un profilé (17) disposé dans la coque de stockage (16) qui entre respectivement en interaction, avec ses surfaces extérieures, avec un élément (22) élastique à la façon du caoutchouc.

2. Machine à semer selon la revendication 1, **caractérisée par** une position relative prévue entre la coque de stockage (16) et le profilé (17) s'écartant de la position neutre sans contrainte au niveau d'au moins une des articulations (9 à 12) de la chaîne à quatre joints articulés (4) en vue d'engendrer une précontrainte différente dans cette au moins une articulation par rapport aux autres articulations.

3. Machine à semer selon la revendication 1 ou 2, **caractérisée en ce que** la position relative de la coque de stockage (16) et du profilé (17) au niveau d'au moins une articulation (9 à 12) est choisie de telle sorte qu'une résultante produisant une pression réduite du soc dans la position de sortie de la chaîne à quatre joints articulés (4) entre la base (5) et les bras oscillants (6, 7) commence à agir au niveau de l'élément de couplage (8).

4. Machine à semer selon l'une quelconque des revendications 1 à 3, **caractérisée en ce que** la position relative prévue entre la coque de stockage (16) et le profilé (17) est choisie de telle sorte au niveau d'au moins une articulation (9 à 12) qu'une limitation inférieure du mouvement des socs à semer (2, 3) se forme vers le bas lors du soulèvement du rail de soc (54), en association avec la précontrainte en baisse des éléments (22) élastiques à la façon du caoutchouc se produisant dans les autres articulations (9 à 12).

5. Machine à semer selon l'une quelconque des revendications 1 à 4, **caractérisée en ce que** la position relative de la coque de stockage (16) et du profilé (17) est choisie de telle sorte au niveau d'au moins deux articulations (9, 10) qu'on obtient une trajectoire plate de la courbe caractéristique force-levée au niveau de l'élément de couplage (8) de la chaîne à quatre joints articulés (4) du fait des précontraintes positive et négative complémentaires s'exerçant dans les différentes articulations.

6. Machine à semer selon l'une quelconque des revendications 1 à 5, **caractérisée en ce que** la position relative de la coque de stockage (16) et du profilé (17) est choisie de telle sorte dans les articulations (9 à 12) qu'on obtient une trajectoire linéaire de la courbe caractéristique force-levée au niveau de l'élément de couplage (8) de la chaîne à quatre joints articulés (4) du fait des précontraintes positive et négative complémentaires s'exerçant dans les différentes articulations.

7. Machine à semer selon l'une quelconque des revendications 1 à 6, **caractérisée en ce que** chaque coque de stockage (16) prend la forme d'un ovale et que le profilé (17) disposé à l'intérieur de la coque de stockage prend la forme d'un ovale de longueur plus limitée dans chacun des deux axes, que l'ovale de la coque de stockage comporte les poches respectivement prévues pour un élément en caoutchouc (22) au niveau des côtés intérieurs opposés de ses deux sommets, et que les deux ovales de chaque articulation (9 à 12) forment ensemble un angle aigu avec leurs axes les plus longs dans chaque position relative.

8. Machine à semer selon l'une quelconque des revendications 1 à 6, **caractérisée en ce que** chaque coque de stockage (16) se compose d'un triangle équilatéral muni de coins arrondis formant, sur le côté intérieur, les poches prévues pour les éléments (22) élastiques à la façon du caoutchouc et que chaque profilé (17) disposé dans la coque de stockage (16) forme un triangle quelque peu congru doté de coins arrondis et disposé, dans la position neutre sans contrainte des éléments élastiques à la façon du caoutchouc, de façon à être tourné de 180° par rapport au triangle formant la coque de stockage.

9. Machine à semer selon l'une quelconque des revendications 1 à 6, **caractérisée en ce que** chaque coque de stockage (16) comporte quatre poches symétriques respectivement conçues pour recevoir un élément (22) élastique à la façon du caoutchouc et que le profilé (17) disposé dans la coque de stockage est un profilé quadratique (23) dont les surfaces extérieures reposent respectivement, dans leur position neutre sans contrainte de l'articulation (9 à 12), contre un élément élastique à la façon du caoutchouc.

10. Machine à semer selon l'une quelconque des revendications 1 à 9, **caractérisée en ce que** les coques de stockage (16) sont respectivement disposées, avec les poches symétriques prévues pour les éléments (22) élastiques à la façon du caoutchouc, au niveau des extrémités des bras oscillants (6, 7) et que les profilés (17) sont respectivement reliés aux extrémités de la base (5) et/ou de l'élément de couplage (8) de la chaîne à quatre joints articulés (4).

11. Machine à semer selon l'une quelconque des revendications 1 à 10, **caractérisée en ce qu'**une position relative différente de la coque de stockage (16) et du profilé (17) peut être atteinte grâce à un agencement angulaire différent correspondant des profilés (17) au niveau des extrémités de la base (5) et/ou de l'élément de couplage (8).

12. Machine à semer selon l'une quelconque des revendications 1 à 11, **caractérisée en ce que** les bras oscillants (5, 6) sont réalisés de façon identique et sont intégrés de la même façon dans la chaîne à quatre joints articulés (4).

13. Machine à semer selon l'une quelconque des revendications 9 à 12, **caractérisée en ce que** chaque coque de stockage (16) se compose de deux tôles à angle droit (18, 19) reliées au niveau de leurs flancs (20, 21) orientés vers l'extérieur et se complétant pour former un tube quadratique dont les coins intérieurs forment les poches prévues pour recevoir les éléments (22) élastiques à la façon du caoutchouc.

14. Machine à semer selon la revendication 13, **caractérisée en ce que** le tube quadratique formant la coque de stockage (16) et le profilé quadratique (23) disposé à l'intérieur de celui-ci sont positionnés selon un angle de 45° dans la position neutre des éléments (22) élastiques à la façon du caoutchouc.

15. Machine à semer, notamment selon l'une quelconque des revendications 1 à 6 et 9 à 12, **caractérisée en ce que** chaque coque de stockage (16) se compose d'une demi-coque (24, 25) en forme de cylindre circulaire, les deux demi-coques (24, 25) étant reliées entre elles par le biais de baguettes de flanc (26, 27) orientées vers l'extérieur et chaque demi-coque présentant, dans la zone de son sommet, une déformation (28 et/ou 29) parallèle à l'axe servant à recevoir les éléments (22) élastiques à la façon du caoutchouc opposés les uns par rapport aux autres et présentant, au niveau de la transition d'avec les baguettes de flanc, respectivement une nervure (30 et/ou 31) venant compléter les nervures (30 et/ou 31) situées au niveau de la transition d'avec les baguettes de flanc (26, 27) de l'autre demi-coque pour former une poche logeant l'élément (22) élastique à la façon du caoutchouc.

16. Machine à semer selon la revendication 15, **caractérisée en ce que** la coque de stockage (16) et le profilé quadratique (23) disposé à l'intérieur de celle-ci sont disposés de telle sorte dans la position neutre des éléments (22) élastiques à la façon du caoutchouc que les coins du profilé quadratique reposent symétriquement entre les éléments (22) élastiques à la façon du caoutchouc.

17. Machine à semer selon l'une quelconque des revendications 1 à 16, **caractérisée en ce que** la base (5) de la chaîne à quatre joints articulés (4) présente une jonction (14, 15) disposée en dehors de la droite imaginaire reliant ses articulations (9, 10) proximales, au niveau du rail de soc (51).

18. Machine à semer selon l'une quelconque des revendications 1 à 17, **caractérisée en ce que** la base (5) peut être intégrée de telle sorte dans la chaîne à quatre joints articulés (4) que la jonction (14, 15) repose contre le rail de soc (51), au choix soit à l'intérieur soit à l'extérieur de la chaîne à quatre joints articulés (4).

19. Machine à semer selon la revendication 15, **caractérisée en ce que** pour guider les socs à semer connexes, la base (5) de la chaîne à quatre joints articulés (4) est rattachée à eux dans la direction d'avancement (43), en alternance devant et/ou derrière le rail de soc (51), selon deux lignes décalées par rapport à la direction d'avancement.

20. Machine à semer selon l'une quelconque des revendications 1 à 19, **caractérisée en ce que** les éléments en caoutchouc (22) prévus dans les articulations (9, 10) sont réalisés de façon à être plus larges au niveau de la base (5) de la chaîne à quatre joints articulés (4), parallèlement à l'axe des articulations (9, 10), que les éléments prévus dans les articulations (9, 10) de l'élément de couplage (8).

21. Machine à semer selon l'une quelconque des revendications 1 à 20, **caractérisée en ce que** les bras oscillants (6, 7) de la chaîne à quatre joints articulés (4) sont constitués à partir de tubes en plastique.

22. Machine à semer selon la revendication 21, **caractérisée en ce que** les tubes en plastique formant les bras oscillants (6, 7) sont coudés de façon régulière.

23. Machine à semer selon l'une quelconque des revendications 1 à 22, **caractérisée en ce que** l'ensemble des composants servant à guider les socs à semer avant et arrière, disposés de façon décalée selon deux rangées, sont réalisés de façon identique.
